# EUROPEAN PATENT APPLICATION

(11) **EP 4 800 930 A2**
(43) Date of publication of application: **02.09.2026**
(21) Application number: 26154040.5
(22) Date of filing: 26.01.2026
(51) Int. Cl.: H04B 1/707, H04B 1/7073, H04J 13/00

(54) **DATA FRAME TRANSMISSION METHOD AND COMMUNICATION SYSTEM FOR A DIGITAL COMMUNICATION SYSTEM**

(30) Priority: 07.02.2025 CN 202510137875
(71) Applicant: Guangzhou Techphant Technology Co., Ltd., Guangzhou Guangdong 510330 (CN)
(72) Inventor: WEN, Wenkun, Guangzhou, 510330 (CN); MIN, Tierui, Guangzhou, 510330 (CN); LIU, Junlin, Guangzhou, 510330 (CN); LIANG, Canquan, Guangzhou, 510330 (CN); LIU, Yu, Guangzhou, 510330 (CN); ZHENG, Lin, Guangzhou, 510330 (CN)
(74) Representative: Metida

(57) **Abstract**

The present application discloses a data frame transmission method and a communication system for a digital communication system. The method includes: steps performed by a digital transmitter, which includes:obtaining preamble configuration information, synchronization code information, physical layer configuration information and service data information;generating a synchronization header data frame based on the preamble configuration information and the synchronization code information;performing a spreading spectrum operation on the physical layer configuration information based on a physical cyclic codebook to obtain physical frame header information;performing frequency modulation on the physical frame header information to obtain a physical header data frame;performing a spreading spectrum operation on the service data information based on a load cyclic codebook to obtain load spread spectrum information. The present application can optimize a decoding process of a receiver, reducing both time required for data decoding by the receiver and latency of the digital communication system.

## Description

### FIELD OF TECHNOLOGY

The present application pertains to the field of communication technology, particularly to a data frame transmission method and a communication system for a digital communication system.

### BACKGROUND

In a wireless digital communication system, in order to enhance anti-interference performance of data during transmission, data to be sent is usually encoded and undergoes a spread spectrum operation at an end of a digital transmitter, thus distributing power of a transmission signal over a wider frequency band and effectively suppressing an interference signal. One of the most commonly used spread spectrum methods nowadays is sequence index spread spectrum, which involves grouping the data to be sent to obtain a spreading code index, and then selecting a corresponding spreading code in a spread spectrum codebook to replace each data packet.

Correspondingly, at an end of a digital receiver, data received aftera sequence index spread spectrum operation needs to be grouped, and then each group of grouped data undergoes a correlation operation with each sequence in the spread spectrum codebook respectively. A maximum value is found among each result of the correlation operation, and decoded data corresponding to a current group of data is determined according to the maximum value. However, this decoding method requires traversing an entire codebook space, resulting in long decoding time for the digital receiver and low communication efficiency of the wireless digital communication system.

### SUMMARY

The present application provides a data frame transmission method and a communication system for a digital communication system, which can optimize a decoding process of a receiver, reduce time for the receiver to decode data and a delay of the digital communication system.

According to a first aspect, the present application provides a data frame transmission method for a digital communication system, including:
steps performed by a digital transmitter, which includes:
obtaining preamble configuration information, synchronization code information, physical layer configuration information and service data information;
generating a synchronization header data frame based on the preamble configuration information and the synchronization code information;
performing a spreading spectrum operation on the physical layer configuration information based on a physical cyclic codebook to obtain physical frame header information;
performing frequency modulation on the physical frame header information to obtain a physical header data frame;
performing a spreading spectrum operation on the service data information based on a load cyclic codebook to obtain load spread spectrum information;
performing frequency modulation on the load spread spectrum information and adding a cyclic prefix to the load spread spectrum information to obtain a load data frame;
combining the synchronization header data frame, the physical header data frame and the load data frame in turn to obtain a target data frame; and
sending the target data frame to a digital receiver;
and the cyclic codebook is an orthogonal codebook set generated by a cyclic shifting of a base sequence, and the base sequence is a random sequence satisfying independent binary uniform distribution.

In some embodiments, the generating a synchronization header data frame based on the preamble configuration information and the synchronization code information includes:
generating a first preamble code and a second preamble code according to the preamble configuration information;
performing a spreading spectrum operation on the synchronization code information based on a synchronization cyclic codebook to obtain synchronization spread spectrum information and performing frequency modulation on the synchronization spread spectrum information, or performing a spreading spectrum operation and modulation on the synchronization code information using a non-random sequence, or modulating the synchronization code information using the non-random sequence, to obtain a synchronization data frame; and
combining the first preamble code, the second preamble code and the synchronization data frame to obtain the synchronization header data frame.

In some embodiments, the performing a spreading spectrum operation on the synchronization code information based on a synchronization cyclic codebook to obtain synchronization spread spectrum information includes:
dividing the synchronization code information according to a preset spreading factor to obtain a plurality of groups of first to-be-spread information;
performing a decimal conversion on each group of the first to-be-spread information to obtain a corresponding first spread spectrum codeword number;
obtaining a spread spectrum codeword corresponding to the first spread spectrum codeword number in the synchronization cyclic codebook; and
replacing each group of the first to-be-spread information with a corresponding spread spectrum codeword to obtain the synchronization spread spectrum information.

In some embodiments, the performing a spreading spectrum operation on the physical layer configuration information based on a physical cyclic codebook to obtain physical frame header information includes:
encoding the physical layer configuration information according to a preset channel encoding format and a preset encoding rate;
dividing encoded physical layer configuration information according to the preset spreading factor to obtain a plurality of groups of second to-be-spread information;
performing a decimal conversion on each group of the second to-be-spread information to obtain a corresponding second spread spectrum codeword number;
obtaining a spread spectrum codeword corresponding to the second spread spectrum codeword number in the physical cyclic codebook; and
replacing each group of the second to-be-spread information with a corresponding spread spectrum codeword to obtain the physical frame header information.

In some embodiments, the performing a spreading spectrum operation on the service data information based on a load cyclic codebook to obtain load spread spectrum information includes:
adding check information to the service data information according to a preset check format and a preset check length to obtain checked service data information;
channel encoding the checked service data information based on a preset encoding algorithm to obtain channel encoded service data information;
interleaving the channel encoded service data information to obtain interleaved service data information;
scrambling the interleaved service data information using a pseudo-random sequence to obtain scrambled service data information; and
performing a spreading spectrum operation on the scrambled service data information based on the load cyclic codebook to obtain the load spread spectrum information.

In some embodiments, the performing a spreading spectrum operation on the scrambled service data information based on the load cyclic codebook to obtain the load spread spectrum information includes:
dividing the scrambled service data information according to a preset spreading factor to obtain a plurality of groups of third to-be-spread information;
performing a decimal conversion on each group of the third to-be-spread information to obtain a corresponding third spread spectrum codeword number;
obtaining a spread spectrum codeword corresponding to the third spread spectrum codeword number in the load cyclic codebook; and
replacing each group of the third to-be-spread information with a corresponding spread spectrum codeword to obtain the load spread spectrum information;
and the preset spreading factor is equal to 2 to the power of SF, SF ∈ [0, 12].

In some embodiments, the data frame transmission method for the digital communication system, further includes:
generating a synchronization codebook base sequence according to a preset first initial value;
generating a physical codebook base sequence according to a preset second initial value;
generating a load codebook base sequence according to a preset third initial value;
the preset first initial value, the preset second initial value and the preset third initial value are different from each other; and the synchronization codebook base sequence, the physical codebook base sequence and the load codebook base sequence are random sequences that satisfy independent binary uniform distribution;
cyclically shifting the synchronization codebook base sequence, the physical codebook base sequence and the load codebook base sequence respectively according to a preset number of shifts to obtain the synchronization cyclic codebook, the physical cyclic codebook and the load cyclic codebook.

In some embodiments, the preset spreading factor is equal to a power of 2; and the method further includes a determination step:
determining whether the number of values 1 or 0 in the codebook base sequence is an even number; the codebook base sequence is the synchronization codebook base sequence, the physical codebook base sequence and the load codebook base sequence;
under a condition that the number of values 1 or 0 in the codebook base sequence is the even number, cyclically shifting the codebook base sequence;
under a condition that the number of values 1 or 0 in the codebook base sequence is not the even number, changing any single 1 to 0, or changing any single 0 to 1, or regenerating the codebook base sequence, and returning to the determination step.

According to a second aspect, the present application provides a data frame transmission method for a digital communication system, including:
steps performed by a digital receiver, which includes:
receiving a target data frame; and the target data frame is in a complex baseband sequence format;
detecting a synchronization header data frame in the target data frame;
determining the physical header data frame and the load data frame in the target data frame based on the synchronization header data frame;
grouping a physical header data frame or a load data frame based on a preset spreading factor to obtain a plurality of groups of complex sequences;
performing a Fourier transform on a cyclic codebook and each group of complex sequences respectively, and then performing a conjugate multiply operation on a Fourier transform result to obtain a plurality of groups of frequency-domain sequences;
performing an inverse Fourier operation on the frequency-domain sequence, then performing a modulo operation on an inverse Fourier operation result to obtain an index of a maximum modulus value; and
obtaining decoded physical layer configuration information or decoded service data information based on each index of the maximum modulus value;
and the complex baseband sequence format is a complex sequence including a real part and an imaginary part.

In some embodiments, the data frame transmission method for the digital communication system further includes:
performing a modulo operation on a real part of an operation result after performing an inverse Fourier operation on the frequency-domain sequence, to obtain the index of the maximum modulus value.

In some embodiments, the obtaining decoded physical layer configuration information or decoded service data information based on each index of the maximum modulus value includes:
dividing the index of the maximum modulus value by an oversampling multiple to obtain initial decoding information; and
rounding down the initial decoding information to obtain corresponding physical layer configuration information or corresponding service data information;
and the oversampling multiple is a preset integer.

In some embodiments, the data frame transmission method for the digital communication system further includes:
calculating a frequency-domain offset and a time-domain offset according to a phase of each index after obtaining the decoded physical layer configuration information;
compensating a load data frame before decoding according the time-domain offset and the frequency-domain offset; and
grouping compensated load data frame based on the preset spreading factor to obtain a plurality of groups of complex sequences.

According to a third aspect, the present application provides a digital transmitter, which includes:
an information acquisition module configured to obtain preamble configuration information, synchronization code information, physical layer configuration information and service data information;
a synchronization header data frame generation module configured to generate a synchronization header data frame based on the preamble configuration information and the synchronization code information;
a physical frame header information spread spectrum module configured to perform a spread spectrum operation on the physical layer configuration information based on a physical cyclic codebook to obtain physical frame header information;
a physical header data frame modulation module configured to perform frequency modulation on the physical frame header information to obtain a physical header data frame;
a load spread spectrum information spread spectrum module configured to perform a spread spectrum operation on the service data information based on a load cyclic codebook to obtain load spread spectrum information;
a load data frame generation module configured to perform frequency modulation on the load spread spectrum information and add a cyclic prefix to the load spread spectrum information to obtain a load data frame; and
a target data frame combination module configured to combine the synchronous header data frame, the physical header data frame and the load data frame in turn to obtain a target data frame.

According to a fourth aspect, the present application provides a digital receiver, which includes:
a target data frame receiving module configured to receive a target data frame, the target data frame is in a complex baseband sequence format;
a synchronization header data frame detection module configured to detect a synchronization header data frame in the target data frame;
a frame structure identity module configured to determine a physical header data frame and a load data frame in the target data frame based on the synchronization header data frame;
a grouping module configured to group the physical header data frame and the load data frame based on the preset spreading factor to obtain a plurality of groups of complex sequences;
a frequency-domain sequence acquisition module configured to perform a Fourier transform on a cyclic codebook and each group of complex sequences respectively, and then perform a conjugate multiply operation on Fourier transform results to obtain a plurality of groups of frequency-domain sequences;
an index acquisition module configured to an inverse Fourier operation on the frequency-domain sequence, and perform a modulo operation on an inverse Fourier operation result to obtain an index of a maximum modulus value; and
a decoding module configured to obtain decoded physical layer configuration information or decoded service data information based on each index of the maximum modulus value.

According to a fifth aspect, the present application provides a digital communication systemand a digital receiver,
the digital transmitter includes:
an information acquisition module configured to obtain preamble configuration information, synchronization code information, physical layer configuration information and service data information;
a synchronization header data frame generation module configured to generate a synchronization header data frame based on the preamble configuration information and the synchronization code information;
a physical frame header information spread spectrum module configured to perform a spread spectrum operation on the physical layer configuration information based on a physical cyclic codebook to obtain physical frame header information;
a physical header data frame modulation module configured to perform frequency modulation on the physical frame header information to obtain a physical header data frame;
a load spread spectrum information spread spectrum module configured to perform a spread spectrum operation on the service data information based on a load cyclic codebook to obtain load spread spectrum information;
a load data frame generation module configured to perform frequency modulation on the load spread spectrum information and add a cyclic prefix to the load spread spectrum information to obtain a load data frame; and
a target data frame combination module configured to combine the synchronous header data frame, the physical header data frame and the load data frame in turn to obtain a target data frame;
the digital receiver includes:
   a target data frame receiving module configured to receive a target data frame, the target data frame is in a complex baseband sequence format;
   a synchronization header data frame detection module configured to detect a synchronization header data frame in the target data frame;
   a frame structure identity module configured to determine a physical header data frame and a load data frame in the target data frame based on the synchronization header data frame;
   a grouping module configured to group the physical header data frame and the load data frame based on the preset spreading factor to obtain a plurality of groups of complex sequences;
   a frequency-domain sequence acquisition module configured to perform a Fourier transform on a cyclic codebook and each group of complex sequences respectively, and then perform a conjugate multiply operation on Fourier transform results to obtain a plurality of groups of frequency-domain sequences;
   an index acquisition module configured to an inverse Fourier operation on the frequency-domain sequence, and perform a modulo operation on an inverse Fourier operation result to obtain an index of a maximum modulus value; and
   a decoding module configured to obtain decoded physical layer configuration information or decoded service data information based on each index of the maximum modulus value.

In summary, compared with the prior art, beneficial effects brought by technical solutions provided in embodiments of the present application at least include:
The data frame transmission method for the digital communication system is provided in the above embodiments. A digital transmitter performs the spread spectrum operation on the data to be sent using the cyclic codebook. After a digital receiver receives the target data frame after the spread spectrum operation using the cyclic codebook, the digital receiver groups the physical header data frame or the load data frame in it. After that, by performing the Fourier transform twice and the inverse Fourier operation once on the grouped complex sequences and the entire cyclic codebook, the decoded information can be obtained without traversing all sequences in the cyclic codebook. Therefore, time for the digital receiver to decode data and a delay of the digital communication system are reduced.

### BRIEF DESCRIPTION

FIG. 1 is a module diagram of a digital communication system according to an exemplary embodiment of the present application;
FIG. 2 is a flowchart of a data frame transmission method for the digital communication system according to an exemplary embodiment of the present application;
FIG. 3 is a flowchart of steps for generating a synchronization header data frame according to an exemplary embodiment of the present application;
FIG. 4 is a flowchart of steps for generating physical frame header information according to an exemplary embodiment of the present application;
FIG. 5 is a flowchart of steps for generating load spread spectrum information according to an exemplary embodiment of the present application; and
FIG. 6 is a flowchart of a data frame transmission method for the digital communication system according to another exemplary embodiment of the present application.

### DETAILED DESCRIPTION

The technical solutions in the embodiments of the present application will be clearly and completely described below in conjunction with drawings in the embodiments of the present application, obviously, the described embodiments are only a part of the embodiments of the present application, not all of the embodiments.

Based on the embodiments in the present application, all other embodiments acquired by those of ordinary skill in the art without creative work shall fall within the protection scope of the present application.

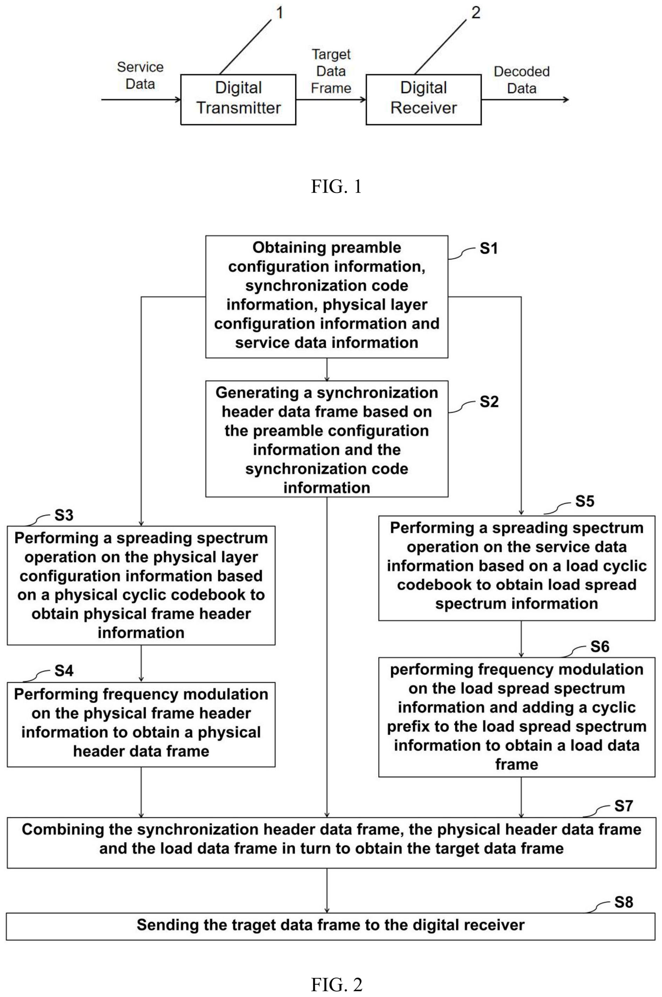

Please refer to FIG.1. FIG.1 is a module diagram of a digital communication system according to an exemplary embodiment of the present application.An embodiment of the present application provides the digital communication system which includes a digital transmitter 1 and a digital receiver 2. By performing a data frame transmission method for a digital communication system of a digital transmitter, the digital transmitter 1 encodes and performs a spread spectrum operation on service data to obtain a target data frame, and sends the target data frame to the data digital receiver 2. By performing a data frame transmission method for a digital communication system of a digital receiver, the digital receiver 2 despreads and decodes the target data frame to obtain decoded data.

The digital transmitter 1 includes an information acquisition module, a synchronization header data frame generation module, a physical frame header information spread spectrum module, a physical header data frame modulation module, a load spread spectrum information spread spectrum module, a load data frame generation module and a target data frame combination module. The digital receiver 2 includes a target data frame receiving module, a synchronization header data frame detection module, a frame structure identity module, a grouping module, a frequency-domain sequence acquisition module, an index acquisition module and a decoding module.

Please refer to FIG.2. FIG.2 is a flowchart of a data frame transmission method for the digital communication system according to an exemplary embodiment of the present application. An embodiment of the present application provides the data frame transmission method for the digital communication system of the digital transmitter, which specifically includes the following steps:
Step S1: obtaining preamble configuration information, synchronization code information, physical layer configuration information and service data information.
Step S2: generating a synchronization header data frame based on the preamble configuration information and the synchronization code information.

The synchronization header data frame is a SHR data frame.

Step S3: performing a spread spectrum operation on the physical layer configuration information based on a physical cyclic codebook to obtain physical frame header information.

Step S4: performing frequency modulation on the physical frame header information to obtain a physical header data frame.

The physical header data frame is a PHR data frame.

Specifically, the physical frame header information may be modulated through a method of frequency-shift keying modulation, minimum frequency-shift keying modulation, Gaussian frequency-shift keying modulation or Gaussian minimum frequency-shift keying modulation to obtain the physical header data frame.

Step S5: performing spread spectrum operation on service data information based on a load cyclic codebook to obtain load spread spectrum information. The service data information may be messages, audio, images, etc.

Step S6: performing frequency modulation on the load spread spectrum information and adding a cyclic prefix to the load spread spectrum information to obtain a load data frame.

Specifically, the load spread spectrum information is modulated through the method of the frequency-shift keying modulation, the minimum frequency-shift keying modulation, the Gaussian frequency-shift keying modulation or the Gaussian minimum frequency-shift keying modulation; then the cyclic prefix is added to each spreadspectrum codeword in the load spread spectrum information.

The load data frame is a Payload data frame, and the Payload data frame consists of a CP (cyclic prefix) and the spread spectrum codeword.

CP may be configured according to different baud rates. For each modulated spread spectrum codeword, data of a CP length at an end of data is extracted and placed at a beginning position of the spread spectrum codeword.

Step S7: combining the synchronization header data frame, the physical header data frame and the load data frame in turn to obtain a target data frame.

Step S8: sending the target data frame to the digital receiver.

Specifically, the target data frame obtained after the above process is in a complex baseband sequence format rather than a traditional binary sequence, this enables the target data frame to have a greater spread spectrum processing gain and a better sequence correlation performance.

Specifically, step S1 is performed by the information acquisition module, step S2 is performed by the synchronization header data frame generation module, step S3 is performed by the physical frame header information spread spectrum module, step S4 is performed by the physical header data frame modulation module, step S5 is performed by the load spread spectrum information spread spectrum module, step S6 is performed by the load data frame generation module, and step S7 is performed by the target data frame combination module.

In the above embodiment, a codebook sequence used for a data spread spectrum operation is a cyclic codebook. Unlike codebooks used in existing sequence index spread spectrum operation, the cyclic codebook of the present application is able to optimize a data decoding processing flow of the digital receiver.

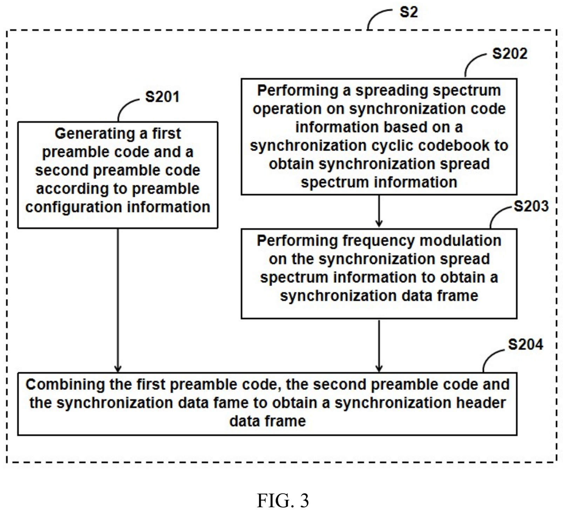

In some embodiments, please refer to FIG.3. In step S2, the preamble configuration information includes first preamble information, thenumber of first preamble repetition, second preamble information and the number of second preamble repetition. Specifically, the following steps are included:
Step S201: generatinga first preamble code and a second preamble code according to the preamble configuration information.

Specifically, step S201 includes: generating a first preamblemeta-sequence Pream#1 according to the first preamble information and repeatedly sending the first preamble meta-sequence Pream#1 as many times as the number of first preamble repetition to obtain the first preamble code; generating a second preamblemeta-sequence Pream#2 according to the second preamble information and repeatedly sending the second preamble meta-sequence Pream#2 as many times as the number of second preamble repetition to obtain the second preamble code. The first preamblemeta-sequence Pream#1 and the second preamble meta-sequence Pream#2 are conjugated to each other, with the same content, the same single transmission lengthand the same spreading factor. And the content, the single transmission length and the spreading factor of the first preamble meta-sequence Pream#1 and the second preamblemeta-sequence Pream#2 may be configured by ahigher layer. A configuration range of the spreading factor is 0 to 12.

In a specific implementation process, the number of repeated transmissions of the first preamble meta-sequence Pream#1 is the number of first preamble repetition, which may be configured by the higher layer and ranges from 2 to 1024. The number of second preamble repetition of the second preamble meta-sequence Pream#2 is fixed to 2.

Step S202: performing a spread spectrum operation on the synchronization code information based on asynchronization cyclic codebook to obtain synchronization spread spectrum information.

Step S203: performing frequency modulation on the synchronization spread spectrum information to obtain asynchronization data frame. A single transmission length of the synchronization data frame Sync is N_Sync. A content and a length of the synchronization data frame Sync may also be configured by the higher layer. In a specific implementation process, the synchronization data frame Sync is fixedly transmitted once.

The synchronization spread spectrum information may be modulated through the method of the frequency-shift keying modulation, the minimum frequency-shift keying modulation, the Gaussian frequency-shift keying modulation or the Gaussian minimum frequency-shift keying modulation to obtain the synchronization data frame.

Step S204: combining the first preamble code, the second preamble code and the synchronization data frame to obtain the synchronization header data frame.

It may be understood that, according to a preamble content, a preamble length *N*_{Pream} and the number of preamble repetitive transmission *N*_{preambeRepeat} configured by the higher layer in preamble configuration information, the first preamble meta-sequence Pream#1 and the second preamble meta-sequence Pream#2 are generated after a spread spectrum operation based on a pseudo-random sequence and FSK/MSK/GFSK/GMSK modulation, and the second preamble meta-sequence Pream#2 is the conjugate of the first preamble meta-sequence Pream#1. The synchronization data frame Sync generates a corresponding sequence after a spread spectrum operation based on the synchronization cyclic codebook and the FSK/MSK/GFSK/GMSK modulation, and the corresponding sequence, the first preamble code and the second preamble code form the SHR data frame in the target data frame.

Specifically, step S202 includes:
Step S211: dividing the synchronization code information according to a preset spreading factor to obtain a plurality of groups of first to-be-spread information.

Specifically, a binary synchronization code information sequence {*bₙ*} with a length of *I*_{Data} is first divided into *L = ceiling*(*I*_{Data}/*SF*) groups, where each first to-be-spread information carries SF bits information. Ani-th group is represented as:
${b}_{i} = \left[{b}_{i ∗ SF} {b}_{i ∗ SF + 1} … {b}_{i ∗ SF + SF - 1}\right]$

The preset spreading factor is *N_{SF} =* 2*^{SF}*, and *SF* is a parameter configured by the higher layer.

Step S212: performing a decimal conversion on each group of the first to-be-spread information to obtain a corresponding first spread spectrum codeword number.

Step S213: obtaining a spread spectrum codeword corresponding to the first spread spectrum codeword number in the synchronization cyclic codebook.

Step S214: replacing each group of the first to-be-spread information with a corresponding spread spectrum codeword to obtain the synchronization spread spectrum information.

Specifically, *bᵢ* is converted to a decimal number *kᵢ*, and*kᵢ* is used to select a spread spectrum sequence***c**_{kᵢ}* in the synchronization cyclic codebook:
${c}_{{k}_{i}} = \left[{c}_{{k}_{i} , 0} {c}_{{k}_{i} , 1} ⋯ {c}_{{k}_{i} , {N}_{SF} - 1}\right]$
${k}_{i} = 0 , 1 , … , {N}_{SF} - 1$

*N_{SF}* pieces of data in each group is replaced with a corresponding spread spectrum codeword in the spread spectrum sequence to obtain the synchronization spread spectrum information.

In some embodiments, step S2 includes:
Step S221: generating the first preamble code and the second preamble code according to the preamble configuration information.
Step S222: performing a spread spectrum operation and modulation on the synchronization code information using a non-random sequence, or performing modulation on the synchronization code information using the non-random sequence, to obtain the synchronization data frame.

The non-random sequence may be a sequence in a format specified as all 1, all 0or 0/1.

Step S223: combining the first preamble code, the second preamble code and the synchronization data frame to obtain the synchronization header data frame.

Specifically, step S221 in the present embodiment is the same as step S201 in the above embodiment, and step S223 is the same as step S203 in the above embodiment, except that step S222 in this embodiment uses the non-random sequence to perform the spread spectrum operation and modulation on the synchronization code information, or directly uses the non-random sequence to modulate the synchronization code information without the spread spectrum operation.

The use of the non-random sequence may further assist the digital receiver in accurately and quickly detecting the synchronization header data frame.

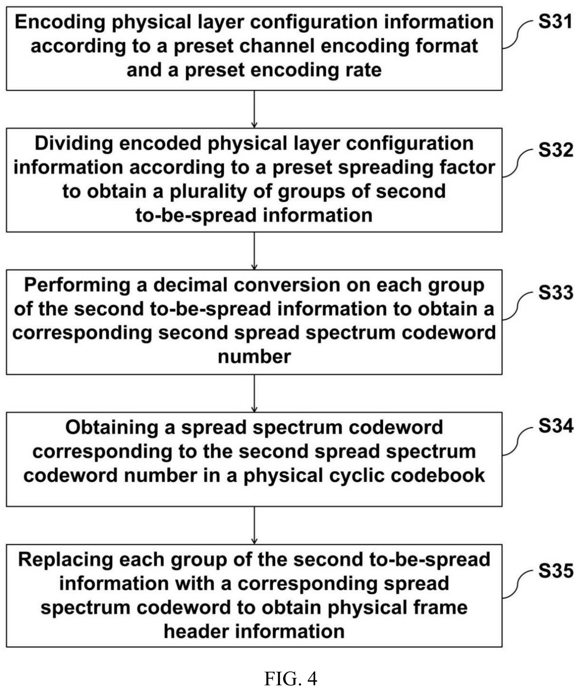

In some embodiments, please refer to FIG.4. Step S3 may specifically include the following steps:
Step S31: encoding the physical layer configuration information according to a preset channel encoding format and a preset encoding rate to obtainencoded physical layer configuration information.

Specifically, the physical layer configuration information is channel encoded and undergoes a cyclic codebook spread spectrum operation to obtain the PHR data frame, where parameters such as the preset spreading factor, a modulation mode, and a channel encoding type are all configured by the higher layer.

Step S32: dividing the encoded physical layer configuration information according to the preset spreading factor to obtain a plurality of groups of second to-be-spread information. Specifically, difference between a spread spectrum method of the physical layer configuration information and the synchronization code information lies only in the cyclic codebook used.

Step S33: performing the decimal conversion on each group of the second to-be-spread information to obtain a corresponding second spreadspectrum codeword number.

Step S34: obtaining a spreadspectrum codeword corresponding to the second spread spectrum codeword number in the physical cyclic codebook.

The physical cyclic codebook may be the same as or different from the synchronization cyclic codebook.

Step S35: replacing each group of the second to-be-spread information with a corresponding spread spectrum codeword to obtain the physical frame header information.

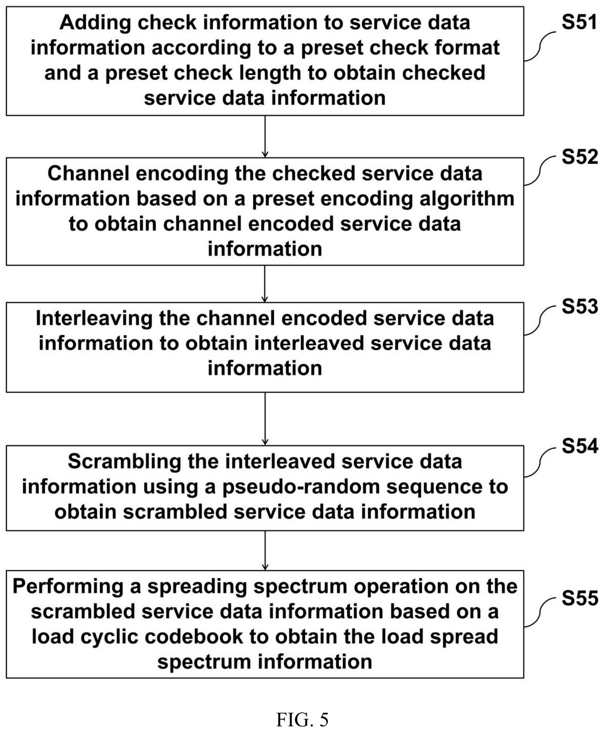

In some embodiments, please refer to FIG.5. Step S5 may specifically include the following steps:
Step S51: adding check information to the service data information according to a preset check format and a preset check length to obtain checked service data information.
Step S52: channel encoding the checked service data information based on a preset encoding algorithm to obtain channel encoded service data information.
Step S53: interleaving the channel encoded service data information to obtain interleaved service data information.

The number of bits of the interleaved service data information remains unchanged.

Step S54: scrambling the interleaved service data information using a pseudo-random sequence to obtain scrambled service data information.

Step S55: performing a spread spectrum operation on the scrambled service data information based on the load cyclic codebook to obtain the load spread spectrum information.

Step S55 specifically includes:
StepS551: dividing the scrambled service data information according to the preset spreading factor to obtain a plurality of groups of third to-be-spread information; a specific dividing method is the same as the dividing method of the physical layer configuration information and the synchronization code information mentioned above.
Step S552: performing the decimal conversion on each group of the third to-be-spread information to obtain a corresponding third spread spectrum codeword number.
Step S553: obtaining a spread spectrum codeword corresponding to the third spread spectrum codeword number in the load cyclic codebook.

The load cyclic codebook may be the same as or different from the aforementioned physical cyclic codebook and synchronization cyclic codebook.

Step S554: replacing each group of the third to-be-spread information with a corresponding spread spectrum codeword to obtain the load spread spectrum information.

Furthermore, step S55 also includes:
After obtaining the third to-be-spread information in step S551, determining whether a length of the third to-be-spread information is equal to the preset spreading factor; under a condition that the length of the third to-be-spread information is unequal to the preset spreading factor, padding the third to-be-spread information with a 0 symbol until the length of the third to-be-spread information is equal to the preset spreading factor.

The above-mentioned padding process may also be applied to the first to-be-spread information and the second to-be-spread information, that is, after dividing according to the preset spreading factor, if a length of the last to-be-spread information does not satisfy the preset spreading factor, padding it with a 0 symbol.

In some embodiments, the above steps S52-S53 may be replaced with:
Step S501: after obtaining the checked service data information in step S51, dividing the checked service data information according to a preset chunk byte to obtain a plurality of byte blocks.
Step S502: channel encoding and interleaving each byte block.
StepS503: cascading each byte block to obtain the interleaved service data information.

Specifically, for a plurality of byte blocks C > 1, after each byte block completes encoding and interleaving independently, a bit of each byte block is Kout. After concatenating 0 to (C-1) byte blocks in turn, the total number of bits M = C * Kout.

In some embodiments, the synchronization cyclic codebook, the physical cyclic codebook and the load cyclic codebook of this method are generated through the following steps:
Step S001: generating a synchronization codebook base sequence according to a preset first initial value; generating a physical codebook base sequence according to a preset second initial value; and generating a load codebook base sequence according to a preset third initial value.

The preset first initial value, the preset second initial value and the preset third initial value are different from each other. The synchronization codebook base sequence, the physical codebook base sequence and the load codebook base sequence are all random sequences that satisfy an independent binary uniform distribution.

The independent binary uniform distribution refers to two independent random variables and eachrandom variable followsa binary uniform distribution.

The binary uniform distribution is a discrete probability distribution, where the random variable can only take two possible values, usually 0 and 1, with each value having an equal occurrence probability of 0.5. If two random variables X and Y are independent and both follow the binary uniform distribution, an occurrenceprobability of each of combinations of X and Y is 0.25, and their joint probability distribution may be represented as:
$P \left(X=0, Y=0\right) = 0.5 * 0.5 = 0.25 ;$
$P \left(X=0, Y=1\right) = 0.5 * 0.5 = 0.25 ;$
$P \left(X=1, Y=0\right) = 0.5 * 0.5 = 0.25 ;$
$P \left(X=1, Y=1\right) = 0.5 * 0.5 = 0.25 .$

Step S002: cyclicallyshifting the synchronization codebook base sequence, the physical codebook base sequence and the load codebook base sequence respectively according to a preset number of shifts to obtain the synchronization cyclic codebook, the physical cyclic codebook and the load cyclic codebook.

Specifically, a cyclic codebook generation method is as follows:
A total length of the cyclic codebook is *N_{SF}* * *N_{SF}*, and the number of a codebook is determined by *SF,* the cyclic codebook is configured by the higher layer, and *SF =* 0 - 12. The number of the codebook *N_{SF} =* 2*^{SF} =* 1,2, ...,4096 (i.e., the preset spreading factor is equal to a power of 2). The length of a sequence is *N_{SF}* = 1,2, ... ,4096. The cyclic codebook is numbered 0,1,,, *k*ᵢ*,,, k_{NSF}*-1 to form the following codebook set, namely the cyclic codebook C. And a selection of a codebook set must ensure orthogonality between cyclic codebooks.$C = \left[{c}_{0} {c}_{1} ⋯ {c}_{{N}_{SF} - 1}\right]$

The spread spectrum sequence is defined as:
${c}_{i} = \left[{c}_{i ∗ {N}_{SF}} {c}_{i ∗ {N}_{SF} + 1} ⋯ {c}_{i ∗ {N}_{SF} + {N}_{SF} - 1}\right]$

Among them, ***c***₀is a codebook base sequence, and the following ***c***₁, ***c***₂, *..., **c**ᵢ* are obtained by cyclically shifting ***c***₀ with ***c***₀, serving as the codebook base sequence. An offset position of the cyclic shift and the preset number of shifts are pre-configured.

In some embodiments, generation steps of the above-mentioned synchronization cyclic codebook, physical cyclic codebook and load cyclic codebook further include:
After obtaining the codebook base sequence in step S001, performing a determination step: determining whether the number of values 1 or 0 in the codebook base sequence is an even number; the codebook base sequence is the synchronization codebook base sequence, the physical codebook base sequence or the load codebook base sequence.

Under a condition that the number of values 1 or 0 in the codebook base sequence is the even number, cyclically shifting the codebook base sequence; under a condition that the number of values 1 or 0 in the codebook base sequence is not the even number, changing any single 1 to 0, or changing any single 0 to 1, or regenerating the codebook base sequence, and returning to the determination step.

Specifically, the above embodiment sets the number of 0 or 1in the codebook base sequence as the even number, and presets the spreading factor to be equal to a power of 2, that is, a multiple of 2, so that the spreadspectrum sequence has a good autocorrelation characteristic, which enables the digital receiver to identify and synchronize the spread spectrum sequence more accurately during decoding, thereby improving decoding success rate.

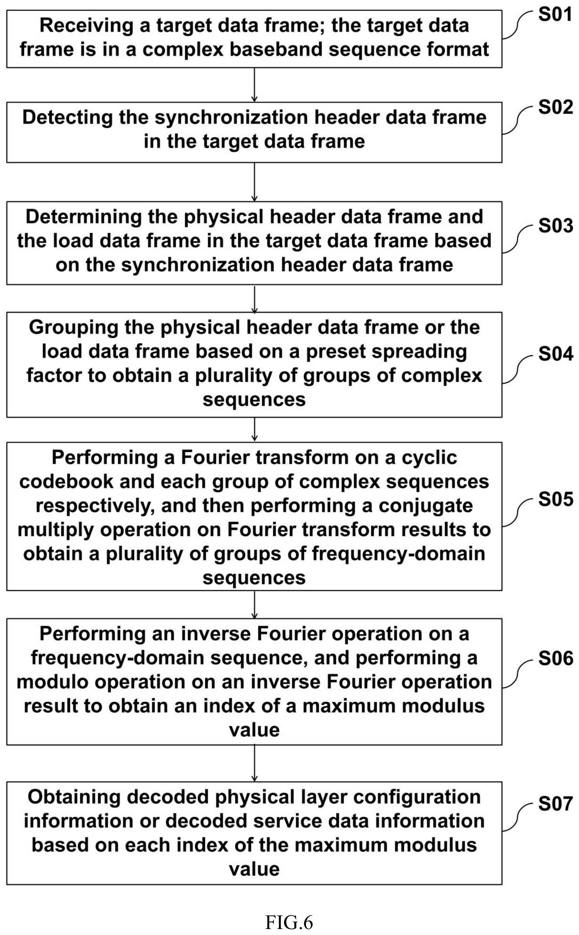

Please refer to FIG.6. Another embodiment of the present application provides a data frame transmission method for the digital communication system of the digital receiver, which may specifically include the following steps:
Step S01: receiving the target data frame; the target data frame is in a complex baseband sequence format.

Specifically, by improving generation steps of the target data frame of the digital transmitter, the present application enables the target data frame to be sent to the digital receiver in the complex baseband sequence format. Different from a traditional binary sequence, the complex baseband sequence has a greater spread spectrum processing gain and better sequence intercorrelation performance, further improving decoding accuracy and real-time performance of digital receiver.

Step S02: detecting the synchronization header data frame in the target data frame.

Step S03: determining the physical header data frame and the load data frame in the target data frame based on the synchronization header data frame.

Specifically, the digital receiver first detects a position of the SHR data frame in the received signal. Once the position of the SHR data frame is determined, the PHR data frame and Payload data frame following the SHR data frame are able to be determined.

Step S04: grouping the physical header data frame or the load data frame based on the preset spreading factor to obtain a plurality of groups of complex sequences.

A length of a complex sequence corresponding to the physical header data frame or the load data frame is a product of the preset spreading factor and an oversampling multiple. Specifically, the data frame {*rₙ*} is divided into a plurality of groups of complex sequences *rᵢ* with a length *m = N_{SF}K_{OS}*, and0 ≤ *i* ≤ *m*. *N_{SF}* is a preset spreading factor used by the aforementioned digital transmitter for an data spread spectrum operation, and *K_{OS}* is the oversampling multiple.

Step S05: performing a Fourier transform on the cyclic codebook and each group of complex sequences respectively, and then performing an conjugate multiplication operation on Fourier transform results to obtain a plurality of groups of frequency-domain sequences.

It is worth noting that, if the physical header data frame is decoded, then the cyclic codebook here is the physical cyclic codebook; and if the load data frame is decoded, then the cyclic codebook here is the load cyclic codebook. When analyzing the synchronization data frame in the SHR data frame in steps S01 and S02, steps are the same as the step of decoding the physical header data frame or the load data frame, and the difference lies only in the cyclic codebook used is the synchronization cyclic codebook. However, regardless of which cyclic codebook is used, data is known to the digital receiver.

Specifically, take the decoding of the physical header data frame, with the physical cyclic codebook serving as the cyclic codebookas an example:
$X \left(f\right) = FFT \left(x\left(n\right)\right)$
$V \left(f\right) = FFT \left(v\left(n\right)\right)$
$Y \left(f\right) = X \left(f\right) ⋅ V * \left(f\right)$

Among them, x(n) is a complex sequence divided by the physical header data frame, *v(n)* is a known physical cyclic codebook. A correlation operation on Fourier transform results of *x(n)* and *v*(*n*) is performed, that is, a conjugate multiplication is performed, to obtain a frequency-domain sequence *Y(f)* corresponding to each complex sequence.

Step S06: performing an inverse Fourier transform on the frequency domain sequence, and performing a modulo operation on an inverse Fourier transform result to obtain an index of a maximum modulus value.

Step S07: obtaining decoded physical layer configuration information or decoded service data information based on each index of the maximum modulus value.

Specifically, an IFFT operation is performed on the frequency-domain sequence *Y(f)* and a modulus of each complex number in the complex sequence after the IFFT operation is calculated, then a maximum value of all modulus values is extracted and an index *kᵢ*of a maximum modulus value is recorded.$W \left(f\right) = IFFT \left(Y\left(f\right)\right)$${k}_{i} = argmax \left|W\left(f\right)\right|$

Then, the index of the maximum modulus value is divided by the oversampling multiple to obtain initial decoding information; corresponding physical layer configuration information or corresponding service data information is obtained by rounding down the initial decoding information, that is, $\left⌊\frac{{k}_{i}}{{K}_{OS}}\right⌋$ is calculated as decoded information.

Assuming that the length of the physical header data frame is 2752, the preset spreading factor *N_{SF} =* 8 and the oversampling multiple *K_{OS} = 8,m = N_{SF}K_{OS} =* 64, so that the physical header data frame is divided into 43 groups (2752/64) of complex sequences.

After the IFFT operation, the index position *kᵢ* is obtained. Assuming that an index corresponding to the maximum value obtained by an operation of the fifth group is 10, then an actual data before SIMS encoding is $\left⌊\frac{{k}_{i}}{{K}_{OS}}\right⌋ = \left⌊\frac{10}{8}\right⌋ = 1$, and an actual data after a binary conversion is 001.

Specifically, step S01 is performed by the target data frame receiving module, step S02 is performed by the synchronization header data frame detection module, step S03 is performed by the frame structure identity module, step S04 is performed by the grouping module, step S05 is performed by the frequency-domain sequence acquisition module, step S06 is performed by the index acquisition module, and step S07 is performed by the decoding module.

A data frame transmission method for the digital communication system is provided in the above embodiments. A transmitter performs the spread spectrum operation on the data to be sent using the cyclic codebook. After a receiver receives the target data frame after the spread spectrum operation using the cyclic codebook, the receiver groups the physical header data frame or the load data frame in it.After that, by performing two Fourier transforms and one inverse Fourier operation on the grouped complex sequences and the entire cyclic codebook, the decoded information can be obtained without traversing all sequences in the cyclic codebook. Therefore, time for the digital receiver to decode data and a delay of the digital communication system are reduced.

In some embodiments, step S06 of the method may be replaced with:
After performing the inverse Fourier operation on the frequency-domain sequence, performing a modulo operationon a real part of an operation result to obtain the index of the maximum modulus value.

Specifically, performing the modulo operation ona complex operation result of IFFT is actually calculating an Euclidean distance between the real part and animaginary part, while performing the modulo operation on the real part is performing the modulo operation only on the real part of a complex operation result. Compared with a direct modulo operation, the modulo operation on the real part not only has lower computational complexity, but also avoids the noise component introduced by the imaginary part, improving stability of the modulus value and an accuracy of decoding.

In some embodiments, this method further includes:
Step S91: calculatinga frequency-domain offset and a time-domain offset based on a phase of each index after obtaining the decoded physical layer configuration information.

Specifically, after the physical header data frame is decoded, the phaseof the index of each complex sequence *x(i)* during a decoding process and the phase of the index of a previous complex sequence *x(i -* 1) are differentially processed to obtain n-1 phase differences:
$Δ {θ}_{k} = angle \left\{{θ}_{k}\right\} - angle \left\{{θ}_{k - 1}\right\}$

The n-1 phase differences are averaged to obtain the frequency-domain offset Δ*f*:
$Δ f = \frac{{\sum }_{k = 0}^{m} Δ {θ}_{k}}{2 {πN}_{FFT}}$

Among them, *N_{FFT}* represents atransform length of the IFFT; and the time-domain offset corresponding to each complex sequence is calculated according to the phase *kᵢ*:
${STO}_{i} = {k}_{i} - \left⌊\frac{{k}_{i}}{{K}_{OS}}\right⌋ {K}_{OS}$

Step S92: compensating a load data frame before decoding according to the time-domain offset and the frequency-domain offset.

Step S93: grouping a compensated load data frame based on the preset spreading factor to obtain a plurality of groups of complex sequences.

In the above embodiment, the physical header data frame and the load data frame are obtained through steps S01~S03 firstly, then the physical layer configuration information is obtained by decoding through steps S04~S07 according to the physical header data frame, and then the load data frame is compensated through steps S91~S93 according to the physical layer configuration information to obtain a plurality of groups of complex sequences corresponding to the compensated load data frame. Finally, based on aplurality of groups of complex sequences corresponding to the compensated load data frame, steps S05 to S07 are executed to obtain more accurate decoded service data information. In this embodiment, before the load data frame is decoded, the time-domain offset and the frequency-domain offsetcalculated and the load data frame is compensated using data duringthe decoding process of the physical header data frame, which further improves decoding accuracy of the load data frame.

Embodiments described in this application may be independent solutions, or may be combined based on internal logic. All these solutions fall within the protection scope of this application. It is understandable that in each of the above-mentioned method embodiments, the methods and operations implemented by the digital transmitter may also be implemented by a component (e.g., chip or circuit) that is usable for the digital transmitter, and the methods and operations implemented by the digital receiver may also be implemented by a component (e.g., chip or circuit) that is usable for the digital receiver.

In the aforementioned embodiments provided in the present application, the methods provided in the embodiments of the present application are described respectively from the perspective of interaction between the digital transmitter and the digital receiver. In order to implement functions of the methods provided in the aforementioned embodiments of the present application, the digital transmitter and the digital receiver may include a hardware structure and/or a software module, to implement the foregoing functions in a form of a hardware structure, a software module, or a hardware structure and a software module. In one embodiment, the above-mentioned functions may be implemented by a processor or FPGA. Whether one of the above functions is performed in the form of a hardware structure, a software module, or a hardware structure and a software module depends on a specific application of the technical solution and the design constraints.

The skilled person in the art will appreciate that the embodiments of the present application may be provided as methods, systems or computer program products. Thus, the present application may be implemented in form of pure hardware embodiments, pure software embodiments or combination of software and hardware embodiments. And the present application may use the form of computer program products implemented on one or more computer readable storage media (including, but not limited to, such as magnetic memory and optical memory) in which computer applicable program codes are contained.

The technical features in the aforementioned embodiments may be randomly combined. For concise description, not all possible combinations of the technical features in the aforementionedembodiment are described. However, the combinations of the technical features should all be considered as falling within the scope described in this specification provided that they do not conflict with each other.

The aforementioned embodiments only show several implementations of the present application and are described in detail, but they should not be construed as a limit to the scope of the present application. It should be noted that, a person of ordinary skill in the art may make various changes and improvements without departing from the ideas of this application, which shall all fall within the protection scope of the present application. Therefore, the protection scope of the present application shall be subject to the appended claims.

## Claims

1. A data frame transmission method for a digital communication system, comprising:
steps performed by a digital transmitter, which comprises:
obtaining preamble configuration information, synchronization code information,physical layer configuration information and service data information;
generating a synchronization header data frame based on the preamble configuration information and the synchronization code information;
performing a spreading spectrum operation on the physical layer configuration information based on a physical cyclic codebook to obtainphysical frame header information;
performing frequency modulation on the physical frame header information to obtain a physical header data frame;
performing a spreading spectrum operation on the service data information based on a load cyclic codebook to obtain load spread spectrum information;
performing frequency modulation on the load spread spectrum information and adding a cyclic prefix to the load spread spectrum informationto obtain a load data frame;
combining the synchronization header data frame, the physical header data frame and the load data frame in turn to obtain a target data frame; and
sending the target data frame to a digital receiver;
wherein the cyclic codebook is an orthogonal codebook set generated by a cyclic shifting of a base sequence, and the base sequence is a random sequence satisfying independent binary uniform distribution.

2. The data frame transmission method for the digital communication system of claim 1, wherein the generating a synchronization header data frame based on the preamble configuration information and the synchronization code information comprises:
generating a first preamble code and a second preamble code according to the preamble configuration information;
performing a spreading spectrum operation on the synchronization code information based on a synchronization cyclic codebook to obtain synchronization spread spectrum information and performing frequency modulation on the synchronization spread spectrum information, or performing a spreading spectrum operation and modulation on the synchronization code information using a non-random sequence, or modulating the synchronization code information using the non-random sequence, to obtain a synchronization data frame; and
combining the first preamble code, the second preamble code and the synchronization data frame to obtain the synchronization header data frame.

3. The data frame transmission method for the digital communication system of claim 2, wherein the performing a spreading spectrum operation on the synchronization code information based on a synchronization cyclic codebook to obtain synchronization spread spectrum information comprises:
dividing the synchronization code information according to a preset spreading factor to obtain a plurality of groups of first to-be-spread information;
performing a decimal conversion on each group of the first to-be-spread information to obtain a corresponding first spread spectrum codeword number;
obtaining a spread spectrum codeword corresponding to the first spread spectrum codeword number in the synchronization cyclic codebook; and
replacing each group of the first to-be-spread information with a corresponding spread spectrum codeword to obtain the synchronization spread spectrum information.

4. The data frame transmission method for the digital communication system of any of claims 1-3, wherein the performing a spreading spectrum operation on the physical layer configuration information based on a physical cyclic codebook to obtain physical frame header information comprises:
encoding the physical layer configuration information according to a preset channel encoding format and a preset encoding rate;
dividing encoded physical layer configuration information according to the preset spreading factor to obtain a plurality of groups of second to-be-spread information;
performing a decimal conversion on each group of the second to-be-spread information to obtain a corresponding second spread spectrum codeword number;
obtaining a spread spectrum codeword corresponding to the second spread spectrum codeword number in the physical cyclic codebook; and
replacing each group of the second to-be-spread information with a corresponding spread spectrum codeword to obtain the physical frame header information.

5. The data frame transmission method for the digital communication system of any of claims 1-4, wherein the performing a spreading spectrum operation on the service data information based on a load cyclic codebook to obtain load spread spectrum information comprises:
adding check information to the service data information according to a preset check format and a preset check length to obtain checked service data information;
channel encoding the checked service data information based on a preset encoding algorithm to obtain channel encoded service data information;
interleaving the channel encoded service data information to obtain interleaved service data information;
scrambling the interleaved service data information using a pseudo-random sequence to obtain scrambled service data information; and
performing a spreading spectrum operation on the scrambled service data information based on the load cyclic codebook to obtain the load spread spectrum information.

6. The data frame transmission method for the digital communication system of claim 5, wherein the performing a spreading spectrum operation on the scrambled service data information based on the load cyclic codebook to obtain the load spread spectrum information comprises:
dividing the scrambled service data information according to a preset spreading factor to obtain a plurality of groups of third to-be-spread information;
performing a decimal conversion on each group of the third to-be-spread information to obtain a corresponding third spread spectrum codeword number;
obtaining a spread spectrum codeword corresponding to the third spread spectrum codeword number in the load cyclic codebook; and
replacing each group of the third to-be-spread information with a corresponding spread spectrum codeword to obtain the load spread spectrum information;
wherein the preset spreading factor is equal to 2 to the power of SF, SF ∈ [0, 12].

7. The data frame transmission method for the digital communication system of claim 6, further comprising:
generating a synchronization codebook base sequence according to a preset first initial value;
generating a physical codebook base sequence according to a preset second initial value;
generating a load codebook base sequence according to a preset third initial value;
wherein the preset first initial value, the preset second initial value and the preset third initial value are different from each other; and the synchronization codebook base sequence, the physical codebook base sequence and the load codebook base sequence are random sequences that satisfy independent binary uniform distribution;
cyclically shifting the synchronization codebook base sequence, the physical codebook base sequence and the load codebook base sequence respectively according to a preset number of shifts to obtain the synchronization cyclic codebook, the physical cyclic codebook and the load cyclic codebook.

8. The data frame transmission method for the digital communication system of claim 7, wherein the preset spreading factor is equal to a power of 2; and the method further comprises a determination step:
determining whether the number of values 1 or 0 in the codebook base sequence is an even number; the codebook base sequence is the synchronization codebook base sequence, the physical codebook base sequence and the load codebook base sequence;
under a condition that the number of values 1 or 0 in the codebook base sequence is the even number, cyclically shifting the codebook base sequence;
under a condition that the number of values 1 or 0 in the codebook base sequence is not the even number, changing any single 1 to 0, or changing any single 0 to 1, or regenerating the codebook base sequence, and returning to the determination step.

9. A data frame transmission method for a digital communication system, comprising:
steps performed by a digital receiver, which comprises:
receiving a target data frame; wherein the target data frame is in a complex baseband sequence format;
detecting a synchronization header data frame in the target data frame;
determining a physical header data frame and a load data frame in the target data frame based on the synchronization header data frame;
grouping the physical header data frame or the load data frame based on a preset spreading factor to obtain a plurality of groups of complex sequences;
performing a Fourier transform on a cyclic codebook and each group of complex sequences respectively, and then performing a conjugate multiply operation on a Fourier transform result to obtain a plurality of groups of frequency-domain sequences;
performing an inverse Fourier operation on the frequency-domain sequence, then performing a modulo operation on an inverse Fourier operation result to obtain an index of a maximum modulus value; and
obtaining decoded physical layer configuration information or decoded service data information based on each index of the maximum modulus value;
wherein the complex baseband sequence format is a complex sequence comprising a real part and an imaginary part.

10. The data frame transmission method for the digital communication system of claim 9, further comprising:
performing a modulo operation on a real part of an operation result after performing an inverse Fourier operation on the frequency-domain sequence, to obtain the index of the maximum modulus value.

11. The data frame transmission method for the digital communication system of claims 9 or 10, wherein the obtaining decoded physical layer configuration information or decoded service data information based on each index of the maximum modulus value comprises:
dividing the index of the maximum modulus value by an oversampling multiple to obtain initial decoding information; and
rounding down the initial decoding information to obtain corresponding physical layer configuration information or corresponding service data information;
wherein the oversampling multiple is a preset integer.

12. The data frame transmission method for the digital communication system of any of claims 9-11, further comprising:
calculating a frequency-domain offset and a time-domain offset according to a phase of each index after obtaining the decoded physical layer configuration information;
compensating a load data frame before decoding according the time-domain offset and the frequency-domain offset; and
grouping compensated load data frame based on the preset spreading factor to obtain a plurality of groups of complex sequences.

13. A digital transmitter, comprising:
an information acquisition module, wherein the information acquisition module is configured to obtain preamble configuration information, synchronization code information, physical layer configuration information and service data information;
a synchronization header data frame generation module, wherein the synchronization header data frame generation module is configured to generate a synchronization header data frame based on the preamble configuration information and the synchronization code information;
a physical frame header information spread spectrum module, wherein the physical frame header information spread spectrum module is configured to perform a spread spectrum operation on the physical layer configuration information based on a physical cyclic codebook to obtain physical frame header information;
a physical header data frame modulation module, wherein the physical header data frame modulation module is configured to perform frequency modulation on the physical frame header information to obtain a physical header data frame;
a load spread spectrum information spread spectrum module, wherein the load spread spectrum information spread spectrum module is configured to perform a spread spectrum operation on the service data information based on a load cyclic codebook to obtain load spread spectrum information;
a load data frame generation module, wherein the load data frame generation module is configured to perform frequency modulation on the load spread spectrum information and add a cyclic prefix to the load spread spectrum information to obtain a load data frame; and
a target data frame combination module, wherein the target data frame combination module is configured to combine the synchronous header data frame, the physical header data frame and the load data frame in turn to obtain a target data frame.

14. A digital receiver, comprising:
a target data frame receiving module, wherein the target data frame receiving module is configured to receive a target data frame, the target data frame is in a complex baseband sequence format;
a synchronization header data frame detection module, wherein the synchronization header data frame detection module is configured to detect a synchronization header data frame in the target data frame;
a frame structure identity module, wherein the frame structure identity module is configured to determine a physical header data frame and a load data frame in the target data frame based on the synchronization header data frame;
a grouping module, wherein the grouping module is configured to group the physical header data frame and the load data frame based on the preset spreading factor to obtain a plurality of groups of complex sequences;
a frequency-domain sequence acquisition module, wherein the frequency-domain sequence acquisition module is configured to perform a Fourier transform on a cyclic codebook and each group of complex sequences respectively, and then perform a conjugate multiply operation on Fourier transform results to obtain a plurality of groups of frequency-domain sequences;
an index acquisition module, wherein the index acquisition module is configured to an inverse Fourier operation on the frequency-domain sequence, and perform a modulo operation on an inverse Fourier operation result to obtain an index of a maximum modulus value; and
a decoding module, wherein the decoding module is configured to obtain decoded physical layer configuration information or decoded service data information based on each index of the maximum modulus value.

15. A digital communication system, comprising: a digital transmitter according to claim 13 and a digital receiver according to claim 14.
